# FASCICULE DE BREVET EUROPEEN

(11) **EP 1 071 830 B1**
(45) Date de publication et mention de la délivrance du brevet: **29.09.2004**
(21) Numéro de dépôt: 00902707.9
(22) Date de dépôt: 04.02.2000
(51) Int. Cl.: C22C 16/00, B32B 15/01, G21C 3/07

(54) **ALLIAGE DE ZIRCONIUM ET DE NIOBIUM COMPRENANT DE L'ERBIUM, PROCEDE DE PREPARATION ET PIECE COMPRENANT LEDIT ALLIAGE**
ZIRKONIUM-NIOBIUM-LEGIERUNG MIT ERBIUM, HERSTELLUNGSVERFAHREN UND LEGIERUNG ENTHALTENDES WERKSTÜCK
ZIRCONIUM AND NIOBIUM ALLOY COMPRISING ERBIUM, PREPARATION METHOD AND COMPONENT CONTAINING SAID ALLOY

(30) Priorité: 05.02.1999 FR 9901370
(43) Date de publication de la demande: 31.01.2001
(73) Titulaire: Commissariat à l'Energie Atomique, 75752 Paris Cedex 15 (FR)
(72) Inventeur: NOE, Maxy, F-84120 Mirabeau (FR); BESLU, Pierre, 13100 Aix En Provence (FR); BRACHET, Jean-Christophe, F-91140 Villebon s/Yvette (FR); PARMENTIER, Philippe, F-91140 Villebon s/Yvette (FR); PORTA, Jacques, F-83560 Rians (FR)
(74) Mandataire: Audier, Philippe André
(86) Numéro de dépôt international: PCT/FR2000/000267
(87) Numéro de publication internationale: WO 2000/046414

(56) Documents cités:
- EP-A- 0 195 155
- EP-A- 0 415 134
- EP-A- 0 532 830
- EP-A- 0 559 096
- US-A- 4 671 826
- US-A- 5 241 571
- US-A- 5 254 308
- US-A- 5 267 284
- US-A- 5 267 290

## Description

La présente invention a trait à un alliage de zirconium et de niobium comprenant de l'erbium comme poison neutronique consommable.

L'invention concerne également un procédé de préparation et de transformation dudit alliage et une pièce comprenant ledit alliage.

Un tel alliage est en particulier destiné à la fabrication des gainages et/ou autres éléments ou pièces de structure d'assemblages combustibles des réacteurs nucléaires utilisant l'eau comme réfrigérant c'est-à-dire notamment des réacteurs de la filière française à eau pressurisée (REP). Cet alliage pourra aussi être utilisé dans tout type de réacteur en développement ou futur.

Afin, notamment de réduire le prix de l'électricité produite, il est intéressant d'allonger les campagnes de fonctionnement des réacteurs nucléaires à eau pressurisée (REP). En effet, une campagne de fonctionnement qui passe d'une durée de 12 mois à une durée de 18 mois permet de réaliser l'économie d'un arrêt par période de trois ans ce qui se répercute d'une manière qui est loin d'être négligeable sur le bilan économique global de l'installation.

L'allongement de la durée de fonctionnement, autrement dit la mise en oeuvre de cycles longs, nécessite cependant une réserve de réactivité supplémentaire du combustible, c'est-à-dire un accroissement de l'enrichissement du combustible initial qui passe par exemple d'environ 3,7% à environ 4,2% pour une gestion par tiers du coeur.

Cette augmentation de la réactivité du combustible doit être compensée par un excès d'anti-réactivité en début du cycle c'est-à-dire par un besoin accru de contrôle de la réactivité.

Selon la pratique courante dans les REP, l'anti-réactivité est apportée par du bore soluble dissous à concentration variable dans le réfrigérant du circuit primaire.

La capture des neutrons excédentaires est obtenue par la réaction ¹⁰B(n,α)⁷Li afin de maintenir au cours du cycle un facteur de multiplication égal à un ce qui permet de contrôler la divergence de la réaction de fission.

Cependant, l'augmentation de la teneur initiale en bore soluble dans le circuit primaire, qui est déjà réalisée dans la pratique, comporte de nombreux inconvénients dont certains ont un impact sur la sûreté de l'installation.

Ainsi, la quantité de bore dissous doit-elle impérativement être maintenue inférieure à une limite maximale pour respecter le critère d'un coefficient de réactivité du modérateur négatif (αₘ<0) dans toutes les conditions de fonctionnement du réacteur, y compris l'arrêt à froid.

Le risque que le coefficient modérateur puisse éventuellement devenir positif n'est pas à écarter car le bore soluble comme les autres poisons sous forme dissoute dans le réfrigérant, est susceptible de se dilater lors d'une augmentation de température en induisant ainsi une contribution positive au coefficient αₘ.

Par ailleurs, l'introduction de quantités supplémentaires de bore sous forme d'acide borique H₃BO₃ augmente d'une part les problèmes de corrosion directe (des alliages austénitiques) et d'autre part de corrosion indirecte liée à la concentration en lithine (alliages base zirconium).

En effet, l'augmentation de la quantité de bore sous forme de H₃BO₃ implique une augmentation de la quantité d'agent de contrôle de pH, généralement ⁷LiOH,, afin de limiter l'activation des circuits résultant du relâchement des composants des matériaux austénitiques par les produits d'activation tels que ⁵⁸Co, ⁶⁰Co, ⁵⁴Mn, ⁵⁹Fe, ⁵¹Cr, etc.

Le lithium de conditionnement, et plus encore les atomes de ⁷Li de recul issus des captures neutroniques sur ¹⁰B impliquent une accélération de la corrosion des gaines.

De plus, d'importants dépôts sur le coeur pourraient limiter les conditions de fonctionnement et la disponibilité de l'installation.

Ce phénomène appelé « axial offset » dans les ouvrages en anglais se rencontre aujourd'hui encore dans les tranches surtout aux USA, qui ont tendance à fonctionner avec une chimie du réfrigérant à pH trop bas.

Les risques de dilution intempestive du bore sont d'autre part un des initiateurs principaux de l'accident de réactivité ou « RIA ».

Un tel accident est particulièrement redouté pendant le rechargement du coeur avec un retrait des grappes et en cas de démarrage intempestif d'une pompe primaire.

Le contrôle par dilution du bore se traduit par une importante production d'effluents contaminés, ainsi que des contraintes d'exploitation considérables ; la vitesse de dilution étant d'ailleurs limitée par le dimensionnement de l'installation.

Enfin, il apparaît que le bore soluble est notoirement insuffisant pour contrôler les coeurs constitués d'un combustible formé à 100% de MOX, étant donné le durcissement du spectre neutronique. Cela serait également le cas pour des réacteurs sous-modérés qui sont éventuellement envisagés pour incinération des déchets.

Des poisons consommables autres que le bore soluble ou utilisés en conjonction avec celui-ci ont donc été envisagés.

Ces poisons se présentent sous forme solide et ne se dilatent donc pas comme l'eau lors d'une augmentation de température. Ils n'induisent pas de ce fait une contribution positive au coefficient de réactivité du modérateur αₘ.

Le Gadolinium lié à la pastille combustible a longtemps été considéré comme le poison solide de référence, mais sa conductivité thermique médiocre entraînant le développement de points chauds a conduit à envisager l'utilisation d'erbium pour les mêmes buts.

Ainsi il a été proposé d'utiliser l'erbium en tant que poison consommable sous forme de sesquioxyde (Er₂O₃), dispersé de manière homogène dans certains crayons de combustibles.

Une telle disposition déplace de la matière fissile depuis les barres de combustible et réduit la fraction globale de matière fissile effectivement disponible pour produire de l'énergie.

Un inconvénient complémentaire à introduire le poison consommable dans le combustible est de polluer les chaînes de fabrication.

On a également suggéré d'utiliser des alliages binaires zirconium-erbium avec de 10 à 90 % en poids d'erbium ainsi que du Zircaloy®-2 avec de 0,5 à 2% en poids d'erbium, en tant que matériau rentrant dans la composition des barres de contrôle.

De tels alliages présentent cependant une mauvaise résistance à la corrosion qui les rendent inadaptés à une mise en oeuvre dans les réacteurs à eau pressurisée (REP ou PWR dans les ouvrages en anglais).

Afin notamment de remédier à ces problèmes, les documents US-A-5 241 571 et US-A-5 267 284 proposent l'introduction d'erbium dans des proportions en pourcentages en masse respectivement de 0,05 à 2 % et de 0,1 à 0,4 % à un alliage à base de zirconium dont les spécifications de composition sont dérivées de celles du zircaloy®-4 et/ou du zircaloy®-2.

En particulier, le document US-A-5 241 571 décrit un alliage de zirconium, dérivé du zircaloy®-4, qui contient de l'erbium ou du gadolinium en tant que poisons consommables, la teneur en erbium étant de préférence de 0,05% à 2% en poids. Cet alliage contient également de préférence jusqu'à 1,4% d'étain, de 0,2 à 0,5% de fer, et de 0,07 à 0,25% de chrome.

Du niobium peut être également ajouté dans une quantité allant jusqu'à 0,6% en poids, de même que du vanadium dans une quantité allant jusqu'à 0,5% en poids. Le rôle du niobium est d'augmenter la résistance mécanique et la résistance à la corrosion de l'alliage.

Un intervalle préféré de la teneur en niobium est de 0,1% à 0,3%, et le tableau 1 de ce brevet indique spécifiquement une teneur en niobium, impérativement, inférieure ou égale à 0,6% en poids, ce qui correspond approximativement à la limite de solubilité communément admise pour le niobium en solution solide à 500 - 600°C dans la phase α (structure hcp) du zirconium.

Enfin, du silicium et de l'oxygène peuvent être également présents à des teneurs respectives de 50 à 120 ppm et de 1000 à 2000 ppm.

Les alliages décrits dans ces documents, et en particulier dans le document US-A-5 241 571 présentent de nombreux inconvénients, défauts et limitations. En particulier, ce document ne décrit à aucun moment la faisabilité industrielle des alliages décrits, aucun exemple de mise en oeuvre n'est donné, si bien que la possibilité d'obtenir, à partir des alliages de ce document, un gainage répondant au cahier des charges envisagé, est sujette à caution. Les mêmes remarques s'appliquent aux alliages du brevet US-A-5 267 284.

Il est en effet bien connu de l'homme du métier dans ce domaine de la technique que l'incorporation de terres rares, telles que l'erbium dans les alliages de type zircaloy® donne un alliage final ne présentant aucune homogénéité qui est donc difficile, voire impossible, à fabriquer, et qui, dans tous les cas, ne peut être effectivement mis en oeuvre.

En particulier, de tels alliages n'ont aucune aptitude aux traitements mécaniques et thermomécaniques comme le laminage et ne peuvent donc jamais être mis sous la forme convenant à leur utilisation première, c'est-à-dire dans les matériaux de gainage.

Par ailleurs, si l'on vise une augmentation de la durée de fonctionnement et également du taux de combustion à la décharge, de tels alliages présentent cependant des propriétés qui ne sont pas encore satisfaisantes notamment sous irradiation. Pour ce qui concerne la résistance vis-à-vis de la corrosion c'est-à-dire oxydation - hydruration - desquamation, et la tenue mécanique représentée par les propriétés de déformation et de fluage, il est en effet admis que les zircaloys (dont s'inspirent les spécifications des brevets US) ont atteint leurs limites en terme de durée de vie, pour les conditions actuelles de fonctionnement, des REP français, en particulier.

Il ressort de ce qui précède qu'il existe un besoin non encore satisfait pour un alliage de zirconium comprenant de l'erbium comme poison neutronique consommable qui présente en particulier des propriétés de résistance à la corrosion et des propriétés de tenue mécanique excellentes et supérieures à celles des alliages existants, en particulier sous irradiation sous flux neutronique.

Il existe, en outre, un besoin pour un alliage de zirconium comprenant de l'erbium, qui puisse être effectivement fabriqué, sans difficultés, qui présente une bonne aptitude à subir des traitements mécaniques et thermomécaniques tels qu'un laminage en vue de sa mise en forme pour les applications auxquelles il est destiné, telles que le gainage dans les réacteurs nucléaires.

Enfin, cet alliage doit, bien sûr, posséder toutes les propriétés d'usage normalement requises dans le cadre notamment d'une telle utilisation : à savoir, comme cela a déjà été mentionné, tenue mécanique, résistance à la corrosion en service, et possibilité de supporter une forte réactivité du combustible.

L'objet de l'invention est donc de fournir un alliage de zirconium, comprenant de l'erbium comme poison neutronique consommable qui ne présente pas les inconvénients, défauts, limitations des alliages de l'art antérieur, qui surmonte les problèmes des alliages de l'art antérieur, et qui remplisse, entre autres, l'ensemble des besoins mentionnés ci-dessus.

Cet objet, et d'autres encore, sont atteints, conformément à l'invention par un alliage de zirconium, comprenant de l'erbium comme poison neutronique consommable, cet alliage étant caractérisé en ce qu'il comprend en poids :
- plus de 0,6 % de niobium ;
- de 0,1 à 3,0 % d'erbium ;
- de 0,05 à 0,5 % d'oxygène ;
- de 50 ppm à 0,6% de fer ;
- jusqu'à 3,5 % d'étain ;
- des impuretés de fabrication ;
et le reste de zirconium.

L'alliage ci-dessus se caractérise ainsi notamment par une teneur en niobium spécifique, c'est-à-dire supérieure à 0,6 %, de préférence cette teneur est de 0,7 à 3% en poids, de préférence encore de 0,80 à 1,20 % en poids.

Une telle plage de teneur en niobium n'est ni décrite ni suggérée dans l'art antérieur et notamment dans le document US-A-5 241 571 où la teneur en niobium n'excède pas 0,6% en poids.

Il en est de même, à fortiori, des plages préférentielles citées ci-dessus.

Une autre caractéristique essentielle et totalement inattendue de l'alliage selon l'invention est qu'il n'existe pas, dans l'alliage, de ségrégation décelable de l'erbium sous forme de précipités et aux interfaces de la matrice.

En d'autres termes, l'erbium est réparti de manière homogène dans l'alliage. Cette répartition remarquablement homogène de l'erbium dans l'alliage se constate dans l'alliage à l'état brut de fusion/solidification.

L'alliage, selon l'invention, va donc à l'encontre et triomphe d'un préjugé communément admis dans le domaine de la préparation des alliages à base de zirconium qui voulait que l'incorporation, notamment de terre rare, telle que l'erbium, dans ces alliages à base de zirconium, donne un alliage final ne présentant aucune homogénéité, et difficile voire impossible à fabriquer.

Or, l'alliage, selon l'invention, au contraire des alliages des brevets US cités plus haut, est parfaitement homogène, en particulier en ce qui concerne la répartition de l'erbium et sa « fabricatilité » a été prouvée et démontrée par les inventeurs, en particulier dans les exemples ci-dessous.

Par ailleurs, l'alliage ainsi décrit, appelé alliage « brut de fusion », selon l'invention, peut, au contraire des alliages de l'art antérieur, subir sans problèmes divers traitements de transformation et/ou de mise en forme thermique et/ou mécanique à chaud et à froid, tels que des traitements d'homogénéisation, et de laminage à froid.

Selon une première forme de réalisation préférée de l'invention, tout ou partie de l'erbium se trouve dans l'alliage sous forme de précipités d'oxydes complexes contenant principalement de l'erbium, dont la taille moyenne est de préférence inférieure ou égale à un micromètre.

Ces précipités sont, de préférence, répartis de manière uniforme, et homogène dans l'alliage. En agissant sur la taille et/ou la répartition de ces oxydes d'erbium, on peut optimiser et améliorer les propriétés mécaniques à chaud.

Un tel alliage est appelé alliage renforcé par dispersion d'oxydes (en anglais : « Oxide Dispersion Strengthened : ODS »).

En outre, dans une seconde forme de réalisation préférée, il a été mis en évidence que l'alliage selon l'invention, dont la teneur en niobium est supérieure à 0,6% en poids présentait une microstructure spécifique et originale, relativement au niobium, qui a été ni mise en évidence ni évoquée dans les alliages de l'art antérieur.

L'alliage selon l'invention se caractérise en effet par une microstructure dans laquelle la phase principale est constituée d'une matrice de zirconium-α, et la phase secondaire est principalement constituée de particules microcristallines individuelles précipitées de niobium-β qui sont de préférence réparties de manière homogène, uniforme, dans ladite matrice de zirconium -α, en plus des précipités éventuels d'erbium sous la forme d'oxydes complexes cités plus haut.

De préférence, lesdites particules de niobium-β ont une taille moyenne déterminée, de préférence encore cette taille moyenne est de 10 à 100 nm, par exemple 50 nm.

Une telle microstructure n'existe que pour les teneurs en niobium supérieures à 0,6 % indiquées plus haut.

En d'autres termes, l'alliage selon l'invention se caractérise par une teneur minimale en niobium, supérieure à 0,6% en poids, qui dépasse la solubilité à 500-600°C communément admise pour le niobium en solution solide dans la phase α du zirconium (structure hcp).

Une fraction de l'élément niobium se trouve donc dispersée dans la matrice principale d'α-zirconium (α-Zr) sous la forme de précipités intermétalliques de β-niobium (β-Nb).

Cette configuration, particulière, spécifique à l'alliage selon l'invention contribue fondamentalement aux excellentes propriétés de l'alliage, et en particulier au bon comportement en service de l'alliage.

Rien ne pouvait laisser supposer à l'homme du métier au regard des enseignements du document US-A-5 241 571, qu'en se plaçant dans cet intervalle spécifique de teneurs en niobium, la structure essentiellement biphasique (sans tenir compte des oxydes d'erbium éventuels) obtenue présenterait dans cette plage définie des propriétés de corrosion et de déformation améliorées.

En effet, dans ledit document US-A-5 241 571 et pour des teneurs en niobium dans l'alliage allant jusqu'à 0,6%, on réalise un alliage que l'on peut considérer comme essentiellement monophasique du moins pour ce qui concerne les deux éléments zirconium et niobium, ce dernier étant dissous dans la matrice de zirconium-α.

Ainsi, on cherchait plutôt dans ce document à obtenir un alliage monophasique et l'homme du métier est absolument dissuadé par les enseignements de ce document d'obtenir une précipitation du niobium dont rien ne pouvait laisser supposer, bien au contraire, qu'elle apporte une amélioration quelconque des propriétés de l'alliage.

Or, c'est précisément la précipitation du niobium-β obtenue dans la plage de teneurs spécifique selon l'invention, ce précipité se produisant par ailleurs sous une forme et d'une manière bien précise qui semble de manière inattendue communiquer à l'alliage selon l'invention une grande partie de ses propriétés excellentes, supérieures en tout cas à celles des alliages analogues de l'art antérieur, mis en oeuvre par exemple dans les réacteurs nucléaires, ou connus du document US-A-5 241 571.

Les propriétés excellentes des alliages selon l'invention concernent notamment la résistance à la corrosion, par exemple à l'oxydation et à l'hydruration, ainsi que ses propriétés de résistance, de tenue mécanique relatives à sa déformation et à son fluage.

L'alliage selon l'invention répond donc à l'ensemble des besoins et critères mentionnés plus haut.

De manière inattendue, ces performances sont peu influencées sous irradiation, notamment sous un flux neutronique, par opposition aux alliages dérivant du Zircaloy-4 pour lesquels les cinétiques de corrosion sous irradiation peuvent s'accélérer d'un facteur 3 ou plus.

L'alliage selon l'invention, du fait de ses propriétés, est donc particulièrement adéquat pour l'usage principal auquel il est destiné, à savoir la fabrication des gainages et autres éléments de structure des assemblages combustibles pour réacteurs nucléaires, en particulier de type REP.

L'alliage selon l'invention permet d'éviter d'augmenter la quantité de bore soluble mise en oeuvre avec les inconvénients qui en découlent.

L'invention a également pour objet une pièce comprenant l'alliage selon l'invention.

Une telle pièce est de préférence une gaine et/ou un élément de structure d'un assemblage de combustible pour réacteur nucléaire (grille de maintien, tube-guide...) de type réacteur à eau pressurisée (REP), ou toute autre conception innovante de réacteur utilisant l'eau (ou l'eau lourde) comme caloporteur.

La pièce comprenant l'alliage selon l'invention est, de préférence, une pièce à structure dite « multiplex » comprenant l'alliage selon l'invention et au moins un autre matériau.

De préférence, ladite pièce est une pièce à structure dite « duplex » ou une pièce à structure dite « triplex ».

La pièce à structure « duplex » se présente, par exemple, sous la forme d'un tube ou tôle co-laminé comprenant une première couche, ou couche interne, constituée de l'alliage selon l'invention, et une deuxième couche ou couche externe placée sur ladite première couche et constituée d'un « autre » métal ou alliage différent de l'alliage selon l'invention constituant la première couche.

De préférence, ladite deuxième couche ou couche externe est également constituée d'un alliage de zirconium, par exemple d'un alliage de zirconium présentant des propriétés optimales vis-à-vis de la corrosion, par exemple de la corrosion externe du tube ou de la tôle en ambiance nucléaire. Cet alliage de zirconium constituant la deuxième couche est de préférence encore un alliage de zirconium ayant la même composition que l'alliage selon l'invention, mais exempt d'erbium et avec une teneur en oxygène éventuellement différente.

Dans le cas d'une pièce à structure dite « triplex », la pièce comprend, en outre, une troisième couche, « encore plus interne », placée sous ladite première couche et constituée également d'un autre métal ou alliage différent de celui de l'invention et, de préférence, identique au métal ou alliage constituant ladite deuxième couche. C'est-à-dire, qu'il s'agit, de préférence, d'un alliage de zirconium analogue à celui de l'invention, mais exempt d'erbium et avec une teneur en oxygène éventuellement différente.

L'invention a également trait à un procédé de préparation et éventuellement de transformation de l'alliage décrit ci-dessus, ledit procédé comprenant : la fusion des éléments de l'alliage tels qu'ils ont été décrits ci-dessus et dans les proportions mentionnées ; et éventuellement :
- une succession de traitements thermiques et d'étapes de mise en forme à chaud et/ou à froid ;
- un traitement thermique final.

Le traitement thermique final est réalisé de préférence à une température inférieure ou égale à 600°C, et pendant une durée supérieure à 1 ou plusieurs minutes, par exemple, 5 heures.

La température est, par exemple, de 580°C et la durée est, par exemple, de 5 à 10 heures.

Plus précisément, l'invention concerne également un procédé de préparation et éventuellement de transformation de l'alliage décrit ci-dessus, ledit procédé comprenant : la fusion des éléments de l'alliage, tels qu'ils ont été décrits ci-dessus et dans les proportions mentionnées ; et éventuellement la succession d'étapes suivantes :
- traitement thermique d'homogénéisation ;
- corroyage à chaud ;
- traitement thermique de recristallisation ;
- laminage à froid ;
- traitement thermique de recristallisation ;
- laminage à froid.

De préférence, les traitements thermiques de recristallisation, en particulier le traitement final, sont réalisés à une température inférieure ou égale à 600°C, et leur durée est de préférence supérieure à 1 ou plusieurs minutes, par exemple, 5 heures, c'est-à-dire que l'on se place alors dans le domaine monophasé α du zirconium et que l'on obtient ainsi une répartition homogène des particules de niobium-β dans l'alliage, qui présentent une taille déterminée « fine », de préférence de l'ordre de 50 µm.

La température est, par exemple, de 580°C, et la durée du traitement est, par exemple, de 5 à 10 heures.

De préférence, la fusion est réalisée en faisant fondre un alliage de zirconium de départ comprenant tous les éléments constitutifs de l'alliage, à l'exception de l'erbium, dans les proportions mentionnées, puis en ajoutant à la phase liquide obtenue, la quantité requise d'erbium, moyennant quoi, l'erbium se dissout dans ledit alliage de départ.

La quantité requise d'erbium peut être ajoutée sous forme métallique.

Une autre possibilité consiste à ajouter la quantité requise d'erbium sous forme alliée, par exemple, sous forme d'oxydes de type E₂O₃.

L'invention va maintenant être décrite plus en détail en référence aux dessins joints dans lesquels:

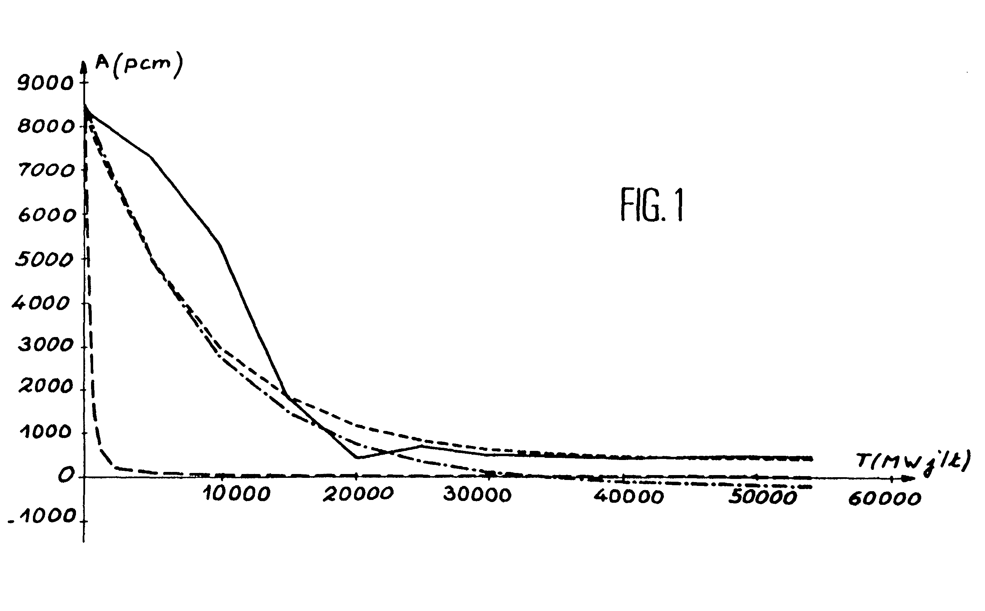

- La figure 1 représente l'évolution de l'anti-réactivité A (exprimée en pcm) en fonction du taux de combustion exprimé en mwj/t, par empoisonnement des gaines pour respectivement
   - 12 crayons à 8 % (courbe en trait plein)
   - un enrichissement à 2 % de la gaine en erbium naturel (courbe en petits pointillés)
   - un enrichissement à 0,5 % de la gaine en erbium 167 (courbes en trait mixtes)
   - un enrichissement à 0,056 % de la gaine en gadolinium naturel (courbe en longs pointillés).

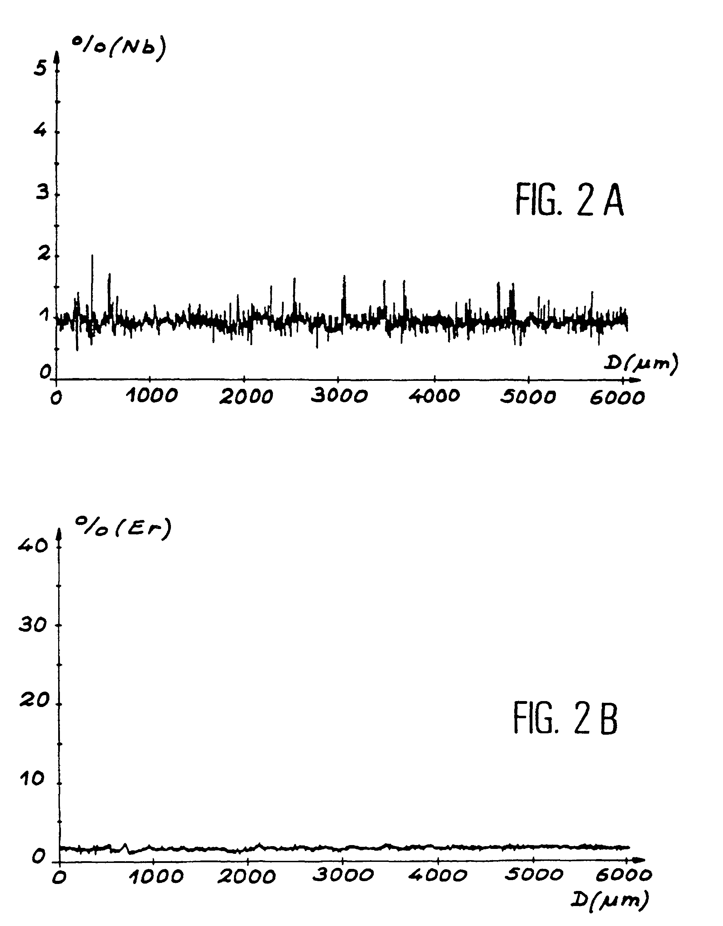

- Les figures 2A et 2B représentent les profils de concentration obtenus par microanalyse X par dispersion de longueur d'onde obtenus à la microsonde électronique sur un échantillon massif poli d'un alliage Zr-1%Nb-1,6%Er-1200 ppm O₂ à l'état brut de solidification.
- La figure 2A donne le pourcentage en poids en Nb en fonction de la distance d'analyse D exprimée en µm tandis que la figure 2B donne le pourcentage en poids en Er en fonction de D exprimé en µm.
- La figure 3 représente les profils de concentration obtenus par microanalyse X par dispersion d'énergie obtenus en microscopie électronique à transmission avec canon à émission de champ (FEG-STEM) sur une lame mince en un alliage Zr-1%Nb-1,6%Er-1200 ppm O₂ à l'état brut de solidification.
- La figure 3A donne le % en poids de Er en fonction de la distance d'analyse D exprimée en nm.
- La figure 3B donne le % en poids de Nb en fonction de la distance d'analyse D exprimée en nm.
- Les figures 4A et 4B représentent les profils de concentration obtenus par microanalyse X par dispersion de longueur d'onde obtenus à la microsonde électronique sur un échantillon massif poli d'un alliage Zr-1%-Nb-1,6%Er et 1200 ppm O₂ à l'état traité thermiquement 30 minutes à 1100°C lors d'une opération d'homogénéisation.

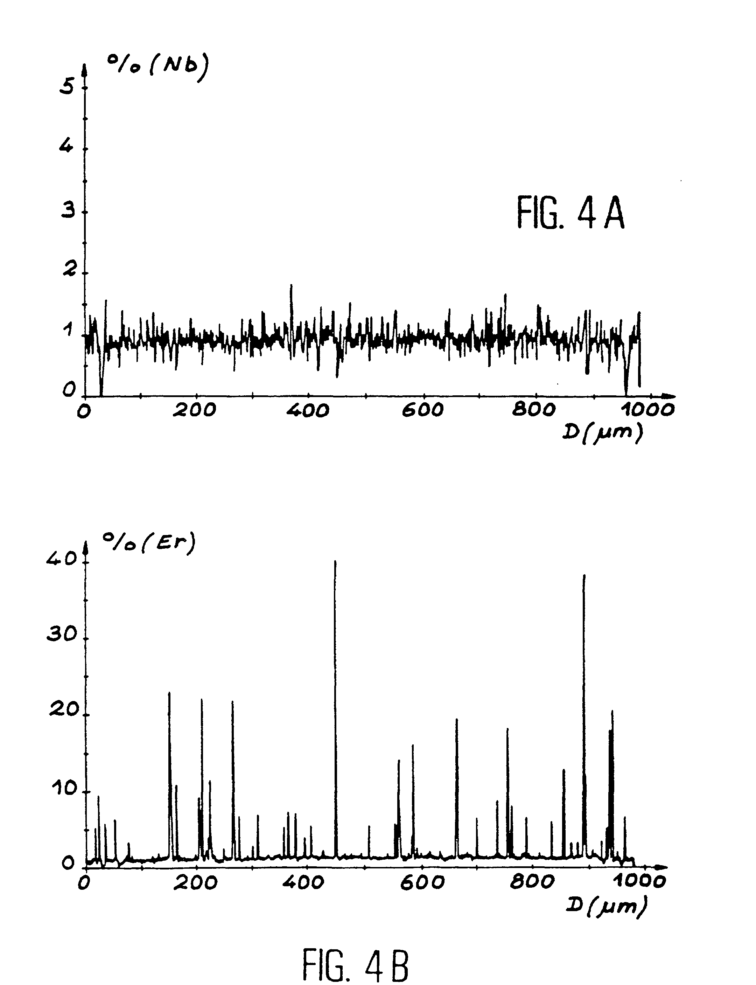

- La figure 4A donne le % en poids de Nb en fonction de D (µm) et la figure 4B donne le % en poids de Er en fonction de D (µm).

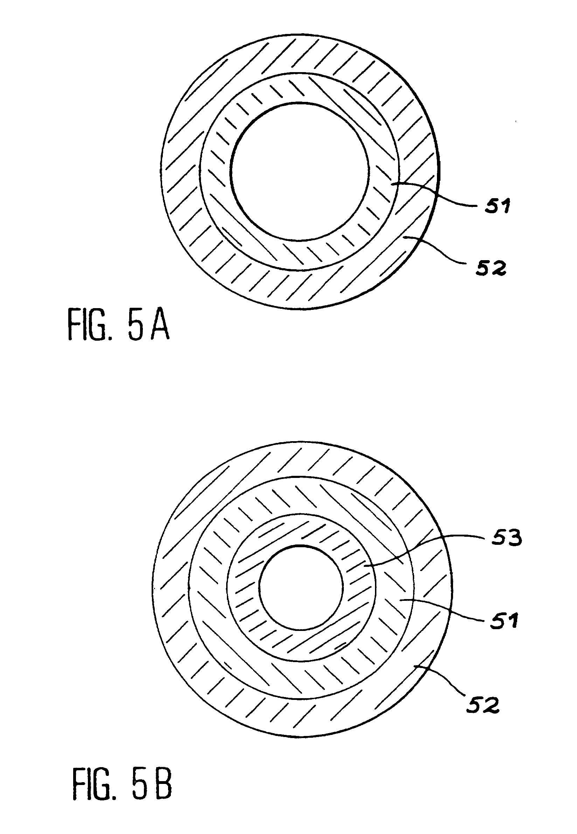

- Les figures 5A et 5B sont des vues schématiques en coupe transversale de tubes comprenant l'alliage de l'invention et présentant respectivement des structures duplex (figure 5A) et triplex (figure 5B).

De manière plus précise, l'alliage selon l'invention comprend de 0,1 à 3% en poids d'erbium qui joue le rôle de poison neutronique consommable.

L'erbium peut être de l'erbium naturel, c'est-à-dire qui contient les isotopes de l'erbium dans les proportions qui se trouvent naturellement dans la nature mais il peut aussi s'agir d'erbium enrichi en isotope ¹⁶⁷Er, ou bien d'une combinaison d'erbium isotopiquement enrichi et d'erbium naturel.

Le type d'erbium mis en oeuvre ainsi que les proportions des divers types d'erbium dans le mélange éventuellement utilisé, pouvant être facilement déterminés, par l'homme du métier dans ce domaine de la technique, en fonction en particulier de l'application voulue.

La teneur en erbium dans l'alliage se situe généralement dans la plage indiquée ci-dessus de 0,1 à 3 % en poids, et de préférence de 0,5 à 2% en poids.

La teneur en erbium peut facilement être déterminée par l'homme du métier et est également fonction de la composition isotopique de l'erbium utilisé.

L'incorporation de l'erbium dans l'alliage selon l'invention permet de communiquer à celui-ci un certain nombre de propriétés inhérentes à l'utilisation de l'erbium comme poison consommable.

Ainsi ¹⁶⁷Er possède-t'il une faible valeur résiduelle exprimée en barns (b) de la section efficace d'absorption (σₐ) lors de la réaction de capture radioactive ¹⁶⁷Er (n,γ), ¹⁶⁸Er (σ = 1, 9b pour ¹⁶⁸Er).

Par contre, la valeur σ = 670b pour ¹⁶⁷Er permet d'assurer à cet absorbant une durée de vie raisonnable vis-à-vis du cycle d'irradiation, par comparaison avec le gadolinium dont les valeurs respectives sont de σ = 610000 b pour le ¹⁵⁵Gd et σ = 254000 b pour le ¹⁵⁷Gd.

Les isotopes absorbants du gadolinium disparaîtraient donc beaucoup trop rapidement lors du cycle d'irradiation. En revanche, tout comme pour ce dernier, le produit de réaction ¹⁶⁸Er de l'erbium n'est pas radioactif et donc ne génère pas une quantité supplémentaires de déchets en cas d'entreposage sur des sites de surface des coques et embouts.

Une autre caractéristique notable de l'erbium est la réaction de capture (n,γ) qui évite l'accumulation de défauts de réseau car l'énergie du photon γ est inférieure à l'énergie de réseau, et d'autre part, ce type de réaction nucléaire évite l'apparition d'espèces chimiques étrangères, en particulier d'hélium.

Des calculs préliminaires de la production d'anti-réactivité par empoisonnement des gaines, selon différentes hypothèses sont représentés, à titre d'exemple, sur la figure 1.

Par ailleurs, l'erbium, comme d'autres éléments de la famille des lanthanides, apporté dans les quantités indiquées plus haut, peut contribuer de manière positive à l'augmentation de la résistance mécanique : via une gamme de fabrication optimisée il est envisageable d'obtenir un alliage renforcé par dispersion d'oxydes d'erbium (ODS) qui trouverait donc également des applications éventuellement non nucléaires, mais pour des températures nécessitant une amélioration des propriétés mécaniques à chaud (fluage)...

En plus des oxydes d'erbium éventuellement présents dans le premier mode de réalisation de l'invention, la micro structure spécifique selon l'invention, avec les précipités également de structure spécifique de niobium-β formant la phase secondaire n'est donc obtenue que pour des teneurs en poids de Nb supérieur à 0,6%.

En effet, pour des teneurs en niobium inférieures, on n'a plus ou quasiment plus de précipités de niobium-β.

De même, pour des concentrations en niobium trop élevées, les propriétés de fonctionnement pourraient éventuellement être dégradées. Il est donc préférable de se placer dans les intervalles préférés pour la teneur en niobium cités ci-dessus.

Par particules individuelles précipitées de niobium-β, on entend généralement que ces particules ont une taille (généralement définie par leur diamètre) moyenne de l'ordre de 10 à 100 nm de préférence de l'ordre de 50 nm.

Compte tenu du fait que dans l'alliage, l'erbium peut se trouver précipité sous forme d'oxydes complexes, il faut ajouter au métal la quantité d'oxygène correspondant à la formation de cet oxyde, afin de maintenir ses propriétés mécaniques.

De ce fait, comme on l'a mentionné ci-dessus, l'alliage selon l'invention contient donc également de l'oxygène à une teneur de 0,05 à 0,5 % en poids. de préférence, la teneur en oxygène est de 0,1 à 0,35 % en poids.

Il est à noter qu'une teneur en oxygène supérieure aux teneurs industrielles habituelles qui sont de 1200 ppm peut être utilisée pour compenser la perte en solution solide de cet élément du fait de la précipitation de tout ou partie de l'erbium sous forme d'oxydes lors des traitements thermiques au cours de la fabrication.

L'alliage selon l'invention contient encore du fer à une teneur de 50 ppm à 0,6 % en poids, de préférence la teneur en fer est de 150 à 350 ppm. L'alliage selon l'invention contient éventuellement de l'étain à une teneur pouvant aller jusqu'à 3,5 % en poids, c'est-à-dire que cette teneur en étain est de 0 à 3,5% en poids ; de préférence la teneur en étain est de 0 à 1,2 %.

L'étain se trouve en solution solide dans la phase principale de zirconium-α.

L'alliage selon l'invention contient en outre un certain nombre d'impuretés de fabrication.

La nature et les teneurs de ces impuretés sont généralement les natures et teneurs typiques des impuretés des alliages à base de zirconium industriels utilisés notamment dans le nucléaire et donc compatibles en particulier avec les exigences du cahier des charges dans cette industrie. Les principales de ces impuretés ainsi que leurs teneurs respectives sont généralement les suivantes :
- silicium : de 10 à 120 ppm
- chlore : de 0 à 20 ppm
- soufre : de 10 à 100 ppm
- phosphore : de 2 à 10 ppm
- bore : de 0,1 à 10 ppm
- calcium : de 0,1 à 10 ppm
- lithium, fluor, métaux lourds : moins de 0,1 ppm (pour chaque élément)

Il est bien évident que ces impuretés de fabrication ne sont données qu'à titre indicatif, et que certaines de ces impuretés peuvent être absentes, de même que d'autres impuretés non citées plus haut pouvant également être présentes.

De même, les teneurs mentionnées plus haut ne sont données qu'à titre indicatif, toutefois, les plages de teneurs sont de préférence à respecter car au delà de celles-ci les propriétés de l'alliage selon l'invention pourraient éventuellement être dégradées.

L'alliage étant à base de zirconium, il contient de manière évidente, et outre les éléments déjà indiqués plus haut, du zirconium, la quantité de zirconium présente représentant le « reste » de l'alliage, c'est-à-dire la quantité nécessaire pour atteindre 100% en poids.

L'invention a également pour objet une pièce comprenant l'alliage selon l'invention.

Cette pièce peut être toute pièce dans laquelle sont de préférence mises à profit les propriétés excellentes de l'alliage selon l'invention, on peut citer à titre d'exemple des utilisations à températures relativement plus élevées ou des niveaux de contraintes supérieurs aux alliages classiques.

Il est bien évident, toutefois, du fait de l'incorporation dans l'alliage selon l'invention d'un poison neutronique consommable tel que l'erbium et du fait en outre que les propriétés de l'alliage sont conservées sous flux neutronique, l'alliage selon l'invention convient plus particulièrement pour des pièces mises en oeuvre en « ambiance nucléaire » en particulier dans l'industrie nucléaire.

La pièce comprenant l'alliage selon l'invention sera donc par exemple une gaine et/ou un élément de structure d'un assemblage de combustible pour réacteur nucléaire de type réacteur à eau (éventuellement, d'une conception différente par rapport aux REP actuels).

Le fait d'introduire un poison consommable (erbium) dans le matériau de gainage, comme c'est le cas avec l'alliage de l'invention, ce poison consommable ayant une nature, des proportions et des propriétés intrinsèques de capture des neutrons optimales vis-à-vis du pilotage de la réactivité du combustible des réacteurs à eau pressurisée (REP) actuels ou futur (et/ou pour d'autres types de réacteurs nucléaires) permet notamment les améliorations suivantes :
- éviter d'introduire le poison consommable dans le combustible et, par conséquent, de générer des problèmes tels que : pollution des chaînes de fabrication, diminution de la fraction globale de combustible et donc du rendement, pour un même volume occupé.
- Simplifier la gestion de la chimie du milieu primaire des REP en fonctionnement par le biais, notamment, d'une diminution de la concentration en acide borique et lithine dans le liquide caloporteur primaire (eau pressurisée).
   En outre, ceci peut conduire à des conditions de fonctionnement moins sévères pour la gaine (corrosion) et une amélioration de certains aspects de sûreté éliminant les accidents de type RIA.
- Permettre de supporter une forte réactivité du combustible, notamment en début de vie, en vue d'augmenter la durée des campagnes de fonctionnement des REP, d'où un gain sur le coût de la production d'électricité d'origine nucléaire.

En effet, l'alliage selon l'invention, en égard à ses excellentes propriétés notamment vis-à-vis de la corrosion et de la déformation, en particulier sous flux neutronique, qui sont nettement supérieures à celles des alliages utilisés à l'heure actuelle dans les réacteurs à eau pressurisée, permet d'atteindre des taux de combustion beaucoup plus élevées que ceux habituellement obtenus, ce qui est particulièrement avantageux dans le cas de la mise en oeuvre de cycles longs.

Avantageusement, l'alliage selon l'invention offre la possibilité de disposer à la fois de gaines erbiées et de gaines non erbiées dans une gestion qui permet un aplatissement radial du flux. Il est ainsi possible d'obtenir une répartition plus homogène des températures à coeur du combustible, en fonction notamment des stratégies de chargement, qui n'est pas envisageable avec seulement un poison neutronique, tel que le bore soluble, dissous dans le réfrigérant (dont la répartition est évidemment homogène dans tout le coeur).

Par ailleurs, l'utilisation d'erbium dans les matériaux métalliques de l'assemblage tels que gaines et tubes-guides, peut se faire conjointement ou de façon complémentaire à l'utilisation de combustible gadolinié UO₂-Gd₂O₃.

En effet, les teneurs en gadolinium dans la pastille combustible sont limitées par les abaissements du point de fusion, de la conductibilité thermique et par des problèmes d'homogénéité, car les deux oxydes UO₂ et Gd₂O₃ ne syncristallisent pas, or, ce type d'inconvénients est moins critique au niveau de la gaine, et à fortiori au niveau des autres structures métalliques en raison des températures beaucoup moins élevées que celles de la pastille de combustible en fonctionnement.

La pièce comprend l'alliage de l'invention, c'est-à-dire qu'elle peut être constituée exclusivement de l'alliage selon l'invention mais elle peut également comprendre un autre matériau généralement métallique.

La pièce peut ainsi être réalisée sous la forme d'un matériau dit multiplex comprenant l'alliage selon l'invention et au moins un autre matériau. De préférence, la pièce est réalisée sous la forme d'un matériau « duplex » ou « triplex » par exemple sous la forme d'un tube ou d'une tôle co-laminé.

Dans le cas de la pièce à structure duplex représentée sur la figure 5A, le matériau constituant l'âme ou couche interne 51, dans ce cas, le tube est constituée de l'alliage de Zirconium objet de la présente invention et la partie externe 52 du tube est constituée d'un autre alliage de Zirconium présentant des propriétés optimales vis-à-vis de la corrosion externe du tube en ambiance nucléaire (chimie du milieu primaire, flux neutronique et température de fonctionnement typiques des REP par exemple), par exemple d'un alliage de zirconium analogue à celui de la couche 51, mais sans erbium.

Dans le cas d'un matériau à structure triplex (figure 5B), le tube comprend, en outre, une couche « encore plus interne » 53 sous la couche 51. Cette couche 53 est, de préférence, constituée du même alliage que celui de la couche 52, c'est-à-dire un alliage, selon l'invention, mais sans erbium.

L'invention à également trait à un procédé de préparation et éventuellement de transformation de l'alliage décrit ci-dessus qui comprend les étapes suivantes :
- Fusion des éléments de l'alliage tels qu'ils sont décrits ci-dessus dans les proportions mentionnées plus haut ; et éventuellement
- succession de traitements thermiques et d'étapes de mise en forme à chaud et/ou à froid ;
- traitement thermique final, de préférence à une température inférieure ou égale à 600°C, et pendant une durée supérieure à 1 ou quelques minutes, par exemple, 5 heures.

De préférence, la température est, par exemple, de 580°C environ et la durée du traitement de 5 à 10 heures.

Dans le produit final obtenu (tôle) tout ou partie de l'erbium peut se retrouver, selon l'invention, sous forme de précipités d'oxydes complexes, dont la taille moyenne est généralement de 5 nm à 5 µm, de préférence inférieure ou égale à 1 µm.

Ces précipités sont de préférence répartis de manière homogène.

En ajustant les paramètres temps-température au cours des diverses étapes de transformation de l'alliage, il est possible d'optimiser la taille des oxydes complexes d'Erbium.

La formation in situ de ces oxydes peut être favorable à l'amélioration de certaines propriétés d'usage. Par exemple, il est envisageable d'obtenir à partir de l'état initial brut de solidification, une répartition suffisamment fine et homogène d'oxydes complexes, en réduisant les durées et/ou les températures du (ou des) traitement(s) thermique(s), pour améliorer les propriétés mécaniques à chaud, par exemple : le fluage.

On peut obtenir ainsi un alliage à base de zirconium renforcé par dispersion d'oxydes (« Oxide Dispersion Strengthened » : ODS)

D'autre part, les traitement thermiques intermédiaires et finaux c'est-à-dire les traitements de recristallisation peuvent être réalisés dans le domaine monophasé α, c'est-à-dire à une température inférieure ou égale à 600°C, de manière à obtenir une distribution fine et homogène de phase β_{Nb} précipitée de diamètre moyen typiquement de 50 nm (phase d'équilibre) et donc une microstructure optimale vis-à-vis des propriétés recherchées.

Il faut noter qu'une telle structure ne peut pas être obtenue à partir des compositions décrites dans le brevet US pré-cité, la teneur en Niobium étant inférieure ou égale à sa limite de solubilité à 500-600°C (≈ 0,6 % en masse).

Le matériau de la présente invention peut comme on l'a vu ci-dessus être utilisé pour le gainage du combustible nucléaire, en particulier dans les REP, mais aussi pour toute application liée à l'utilisation de l'énergie nucléaire pour laquelle il est nécessaire de disposer d'un matériau absorbant de manière monotone au cours du temps d'utilisation.

Enfin, par le biais de l'obtention d'une dispersion homogène et suffisamment fine d'oxydes d'Erbium grâce à une gamme de fabrication optimisée, il est envisageable d'obtenir un alliage à base de Zirconium renforcé par dispersion d'oxydes (ODS) qui peut être utilisé non seulement pour des applications nucléaires, mais aussi pour des applications non nucléaires en température nécessitant une amélioration de la résistance mécanique à chaud comme par exemple les propriétés de fluage.

L'invention va maintenant être décrite en référence aux exemples suivants, donnés à titre illustratif et non limitatif.

### EXEMPLES

Ces exemples illustrent la préparation d'un alliage selon l'invention et démontrent la faisabilité industrielle de l'introduction de l'erbium dans un alliage à base de zirconium mise en évidence par la fabrication d'une tôle laminée à partir de cet alliage.

### EXEMPLE 1

Cet exemple illustre l'élaboration d'un alliage selon l'invention. La phase d'élaboration de l'alliage a consisté tout d'abord à refondre un alliage industriel à base de zirconium contenant 1% en poids de niobium en lui ajoutant 1,6 % d'erbium sous forme métallique.

La composition de l'alliage obtenu est précisée dans le tableau I ci-dessous :

**TABLEAU I**

| Composition chimique de l'alliage élaboré. | | | | | | |
|---|---|---|---|---|---|---|
| Eléments | Nb | O | Fe | Erbium | Impuretés | Zr |
| % ou ppm (masse) | ≈ 1% | ≈ 1200 ppm | ≈ 250 ppm | ≈ 1,6% | Teneurs typiques des alliages industriels | Le complément |

La microstructure du matériau « brut de fusion » obtenu a été étudiée par différents procédés d'analyse.

Les analyses de répartition chimique sont faites d'une part à l'échelle micronique par la technique de microanalyse X par dispersion de longueur d'onde, et d'autre part à l'échelle submicronique par la technique de microanalyse X par dispersion d'énergie obtenus en microscopie électronique à transmission avec canon à émission de champ (FEG-STEM) sur lame mince.

Les figures 2A et 2B représentent les profils de concentration obtenus par microanalyse X par dispersion de longueur d'onde obtenus à la microsonde électronique sur un échantillon massif poli d'un alliage Zr-1%Nb-1,6%Er-1200 ppm O₂ à l'état brut de solidification.

La figure 2A donne le pourcentage en poids en Nb en fonction de la distance d'analyse D exprimée en µm tandis que la figure 2B donne le pourcentage en poids en Er en fonction de la distance d'analyse D exprimée en µm.

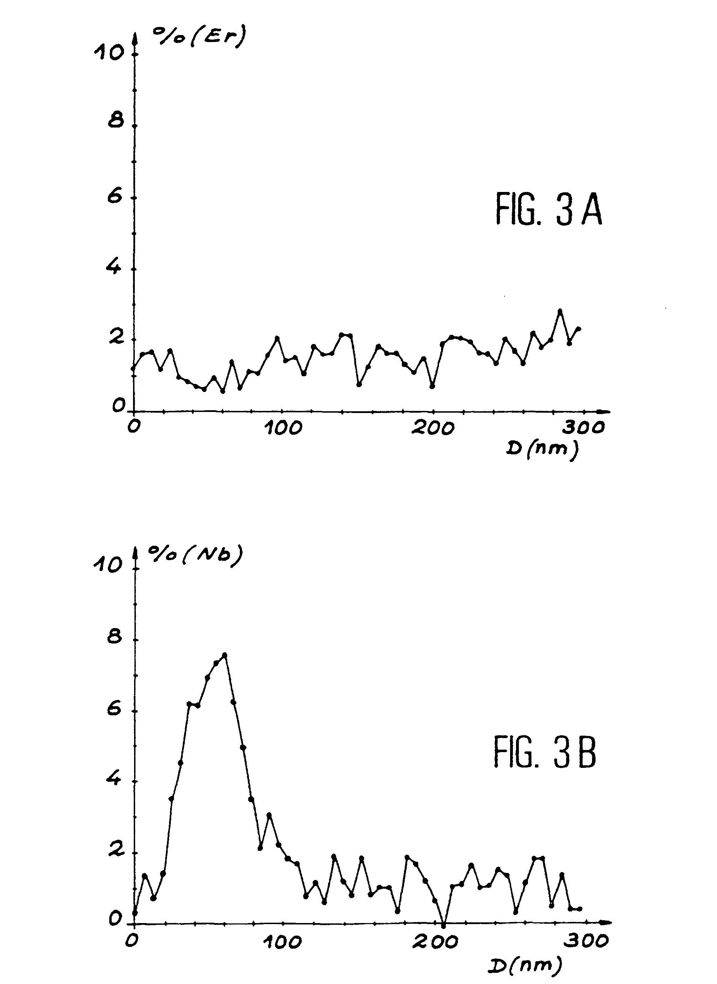

La figure 3 représente les profils de concentration obtenus par microanalyse X par dispersion d'énergie obtenus en microscopie électronique à transmission avec canon à émission de champ (FEG-STEM) sur une lame mince en un alliage Zr-1%Nb-1,6%Er-1200 ppm O₂ à l'état brut de solidification.

La figure 3A donne le % en poids de Er en fonction de la distance d'analyse D exprimée en nm.

La figure 3B donne le % en poids de Nb en fonction de la distance d'analyse D exprimée en nm.

On constate sur ces figures qu'il n'y a pas de ségrégation décelable de l'erbium sous forme de précipités et aux interfaces de la matrice.

L'erbium en addition est donc, contre toute attente, réparti de manière remarquablement homogène à ce stade de la fabrication, c'est-à-dire dans l'alliage à l'état brut de solidification, ce que les brevets antérieurs cités plus haut ne laissaient absolument pas présager.

### EXEMPLE 2

A partir de l'alliage élaboré dans l'exemple 1 (alliage « brut de fusion ») on prépare une tôle laminée par la succession d'étapes suivantes

On effectue tout d'abord un traitement thermique d'homogénéisation à 1100°C pendant 30 minutes sous vide secondaire avec refroidissement rapide, puis on réalise la gamme de transformation suivante :
- Corroyage à chaud : 30 % par passe à environ 580°C ;
- Traitement thermique de recristallisation en phases α à 580°C pendant 2 heures sous vide ;
- Laminage à froid avec 50 % de réduction d'épaisseur ;
- Traitements thermiques de recristallisation à 580°C de 5 à 10 heures.

Il est à noter que la transformabilité à froid du matériau est au moins aussi bonne que celle de l'alliage industriel de référence (sans ajout d'erbium).

L'examen microstructural de l'alliage après les divers traitements thermiques et la mise en forme par laminage montre que tout ou partie de l'erbium se retrouve sous forme de précipités d'oxydes complexes dont la taille moyenne est de l'ordre du micron.

Dans la tôle laminée finale, les précipités sont répartis de manière homogène comme cela est montré sur les figures 4A et 4B qui représentent les profils de concentration obtenus par microanalyse X par dispersion de longueur d'onde obtenus à la microsonde électronique sur un échantillon massif poli d'un alliage Zr-1%-Nb-1,6%Er et 1200 ppm O₂ à l'état traité thermiquement 30 minutes à 1100°C lors d'une opération d'homogénéisation.

La figure 4A donne le % en poids de Nb en fonction de D (µm) et la figure 4B donne le % en poids de Er en fonction de D (µm).

## Revendications

1. Alliage de zirconium, comprenant de l'erbium comme poison neutronique consommable, **caractérisé en ce qu'**il comprend en poids :
- plus de 0,6 % de niobium ;
- de 0,1 à 3,0 % d'erbium ;
- de 0,05 à 0,5 % d'oxygène ;
- de 50 ppm à 0,6% de fer ;
- jusqu'à 3,5 % d'étain ;
- des impuretés de fabrication ;
et le reste de zirconium.

2. Alliage selon la revendication 1 **caractérisé en ce qu'** il comprend de 0,7 à 3 % en poids de niobium.

3. Alliage selon la revendication 2 **caractérisé en ce qu'**il comprend de 0,80 à 1,20 % en poids de niobium.

4. Alliage de zirconium selon l'une quelconque des revendications 1 et 3 **caractérisé en ce qu'**il comprend de 0,5 à 2,0 % en poids d'erbium.

5. Alliage de zirconium selon l'une quelconque des revendications 1 à 4 **caractérisé en ce que** l'erbium est choisi parmi l'erbium naturel, l'erbium isotopiquement enrichi en ¹⁶⁷Er et leurs mélanges.

6. Alliage de zirconium selon l'une quelconque des revendications 1 à 5 **caractérisé en ce que** lesdites impuretés de fabrication comprennent :
- de 10 à 120 ppm de silicium
- de 0 à 20 ppm de chlore
- de 10 à 100 ppm de soufre
- de 2 à 10 ppm de phosphore
- de 0,1 à 10 ppm de bore
- de 0,1 à 10 ppm de calcium
- moins de 0,1 ppm de chacun des éléments suivants : lithium, fluor, métaux lourds.

7. Alliage de zirconium selon l'une quelconque des revendications 1 à 6, **caractérisé en ce que** l'erbium est réparti de manière homogène dans l'alliage et **en ce qu'**il n'existe pas de ségrégation de l'erbium sous forme de précipités.

8. Alliage de zirconium selon l'une quelconque des revendications 1 à 6, dans lequel tout ou partie de l'erbium se trouve dans l'alliage sous forme de précipités d'oxydes complexes contenant principalement de l'erbium.

9. Alliage selon la revendication 8, dans lequel la taille moyenne desdits précipités est inférieure ou égale à un micromètre.

10. Alliage selon l'une quelconque des revendications 8 et 9, dans lequel lesdits précipités sont répartis de manière uniforme, homogène dans l'alliage.

11. Alliage de zirconium selon l'une quelconque des revendications 1 à 10 **caractérisé en ce que** ledit alliage présente une microstructure dans laquelle la phase principale est constituée d'une matrice de zirconium-α, et la phase secondaire est principalement constituée de particules microcristallines individuelles précipitées de niobium-β.

12. Alliage de zirconium selon la revendication 7 **caractérisé en ce que** lesdites particules de niobium-β de la phase secondaire sont réparties de manière homogène, uniforme dans la matrice de zirconium-α de l'alliage.

13. Alliage selon la revendication 12, dans lequel lesdites particules de niobium-β de la phase secondaire ont une taille moyenne de 10 à 100 nm.

14. Alliage de zirconium selon la revendication 13 **caractérisé en ce que** lesdites particules de niobium-β de la phase secondaire ont une taille moyenne de 50 nm.

15. Pièce comprenant l'alliage de zirconium selon l'une quelconque des revendications 1 à 14.

16. Pièce selon la revendication 15 **caractérisée en ce qu'**elle est constituée par une gaine et/ou un élément de structure d'un assemblage de combustible pour réacteur nucléaire.

17. Pièce selon la revendication 15 **caractérisée en ce qu'**elle présente une structure dite multiplex comprenant l'alliage selon l'une quelconque des revendications 1 à 14 et au moins un autre matériau.

18. Pièce selon la revendication 17, **caractérisée en ce qu'**elle présente une structure dite « duplex ».

19. Pièce selon la revendication 17, **caractérisée en ce qu'**elle présente une structure dite « triplex ».

20. Pièce selon la revendication 18 **caractérisée en ce qu'**elle est sous la forme d'un tube ou d'une tôle co-laminé comprenant une première couche ou couche interne constituée de l'alliage selon l'une quelconque des revendications 1 à 14 et une deuxième couche ou couche externe placée sur ladite première couche et constituée d'un autre métal ou alliage différent de l'alliage constituant ladite première couche.

21. Pièce selon la revendication 20, dans laquelle ladite deuxième couche est constituée d'un alliage de zirconium.

22. Pièce selon la revendication 21 dans laquelle ledit alliage de zirconium constituant la deuxième couche a la même composition que l'alliage constituant la première couche, mais est exempt d'erbium, et avec une teneur en oxygène éventuellement différente.

23. Pièce selon l'une quelconque des revendications 21 et 22, dans laquelle ledit alliage constituant la deuxième couche présente des propriétés optimales vis-à-vis de la corrosion externe du tube ou de la tôle.

24. Pièce selon la revendication 19 et l'une quelconque des revendications 20 à 23, comprenant, en outre, une troisième couche placée sous ladite première couche, ladite troisième couche étant constituée d'un autre métal ou alliage différent de l'alliage constituant la première couche.

25. Pièce selon la revendication 24, dans laquelle ledit métal ou alliage constituant la troisième couche est identique au métal ou alliage constituant la deuxième couche.

26. Procédé de préparation et éventuellement de transformation de l'alliage selon l'une quelconque des revendications 1 à 14, comprenant la fusion des éléments de l'alliage tels qu'ils sont décrits dans l'une quelconque des revendications 1 à 6 ; et éventuellement :
- une succession d'étapes de traitements thermiques et d'étapes de mise en forme à chaud et/ou à froid ;
- un traitement thermique final.

27. Procédé selon la revendication 26, dans lequel ledit traitement thermique final est réalisé à une température inférieure ou égale à 600°C et pendant une durée supérieure à 1 ou plusieurs minutes.

28. Procédé de préparation et éventuellement de transformation de l'alliage selon l'une quelconque des revendications 1 à 14, comprenant la fusion des éléments de l'alliage tels qu'ils sont décrits dans l'une quelconque des revendications 1 à 6 ; et éventuellement la succession d'étapes suivantes :
- Traitement thermique d'homogénéisation ;
- Corroyage à chaud ;
- Traitement thermique de recristallisation ;
- Laminage à froid ;
- Traitement thermique de recristallisation ;
- Laminage à froid.

29. Procédé selon la revendication 28 dans lequel les traitements thermiques de recristallisation sont réalisés à une température inférieure ou égale à 600°C et pendant une durée de préférence supérieure à 1 ou plusieurs minutes.

30. Procédé selon la revendication 26 ou la revendication 28, dans lequel ladite fusion est réalisée en faisant fondre un alliage de zirconium de départ, comprenant tous les éléments constitutifs de l'alliage, à l'exception de l'erbium, puis en ajoutant, à la phase liquide obtenue, la quantité requise d'erbium, moyennant quoi l'erbium se dissout dans ledit alliage de départ.

31. Procédé selon la revendication 30, dans lequel la quantité requise d'erbium est ajoutée sous forme métallique.

32. Procédé selon la revendication 30, dans lequel la quantité requise d'erbium est ajoutée sous forme alliée.

33. Procédé selon la revendication 32, dans lequel la quantité requise d'erbium est ajoutée sous forme d'oxydes de type Er₂O₃.

## Patentansprüche

1. Zirkonium-Legierung, Erbium als abbrennbares Neutronengift enthaltend, **dadurch gekennzeichnet, dass** sie in Gewichtsanteilen enthält:
- mehr als 0,6 % Niobium;
- 0,1 bis 3,0 % Erbium;
- 0,05 bis 0,5 % Sauerstoff;
- 50 ppm bis 0,6 % Eisen;
- bis zu 3,5 % Zinn;
- Fabrikationsverunreinigungen;
und den Rest als Zirkonium.

2. Legierung nach Anspruch 1, **dadurch gekennzeichnet, dass** sie 0,7 bis 3 % Niobium enthält.

3. Legierung nach Anspruch 2, **dadurch gekennzeichnet, dass** sie 0,80 bis 1,20 % Niobium enthält.

4. Zirkonium-Legierung nach einem der Ansprüche 1 und 3, **dadurch gekennzeichnet, dass** sie 0,5 bis 2,0 Gew.-% Erbium enthält.

5. Zirkonium-Legierung nach einem der Ansprüche 1 bis 4, **dadurch gekennzeichnet, dass** das Erbium ausgewählt wird unter natürlichem Erbium, isotopisch mit ¹⁶⁷Er angereichertem Erbium und ihren Mischungen.

6. Zirkonium-Legierung nach einem der Ansprüche 1 bis 5, **dadurch gekennzeichnet, dass** die Fabrikationsverunreinigungen umfassen:
- 20 bis 120 ppm Silicium
- 0 bis 20 ppm Chlor
- 10 bis 100 ppm Schwefel
- 2 bis 10 ppm Phosphor
- 0,1 bis 10 ppm Bor
- 0,1 bis 10 ppm Calcium
- weniger als 0,1 ppm von jedem der folgenden Elemente: Lithium, Fluor, Schwermetalle.

7. Zirkonium-Legierung nach einem der Ansprüche 1 bis 6, **dadurch gekennzeichnet, dass** das Erbium homogen in der Legierung verteilt ist und dass es keine Segregation des Erbiums in Form von Niederschlägen bzw. Präzipitaten gibt.

8. Zirkonium-Legierung nach einem der Ansprüche 1 bis 6, **dadurch gekennzeichnet**, bei der das Erbium in der Legierung ganz oder teilweise in Form von komplexen Oxidpräzipitaten vorhanden ist, die hauptsächlich Erbium enthalten.

9. Legierung nach Anspruch 8, bei der die mittlere Größe dieser Präzipitate gleich einem Mikrometer ist oder kleiner.

10. Legierung nach einem der Ansprüche 8 und 9, bei der die genannten Präzipitate in homogener Weise gleichmäßig in der Legierung verteilt sind.

11. Zirkonium-Legierung nach einem der Ansprüche 1 bis 10, **dadurch gekennzeichnet, dass** die genannte Legierung eine Mikrostruktur aufweist, deren Hauptphase durch eine Zirkonium-α-Matrix gebildet wird und die Sekundärphase hauptsächlich durch niedergeschlagene bzw. gefällte individuelle mikrokristalline Niobium-β-Teilchen.

12. Zirkonium-Legierung nach Anspruch 7, **dadurch gekennzeichnet, dass** die genannten Niobium-β-Teilchen der Sekundärphase in homogener Weise gleichmäßig in der Zirkonium-α-Matrix verteilt sind.

13. Zirkonium-Legierung nach Anspruch 12, bei der die genannten Niobium-β-Teilchen der Sekundärphase eine mittlere Größe von 10 bis 100 nm haben.

14. Zirkonium-Legierung nach Anspruch 13, bei der die genannten Niobium-β-Teilchen der Sekundärphase eine mittlere Größe von 50 nm haben.

15. Teil aus der Zirkonium-Legierung nach einem der Ansprüche 1 bis 14.

16. Teil nach Anspruch 15, **dadurch gekennzeichnet, dass** es eine Hülle und/oder ein Strukturelement einer Brennstoffkassette für einen Kernreaktor bildet.

17. Teil nach Anspruch 15, **dadurch gekennzeichnet, dass** es eine sogenannte Multiplex-Struktur aufweist, welche die Legierung nach einem der Ansprüche 1 bis 14 und wenigstens ein weiteres Material umfasst.

18. Teil nach Anspruch 17, **dadurch gekennzeichnet, dass** es eine sogenannte Duplex-Struktur aufweist.

19. Teil nach Anspruch 17, **dadurch gekennzeichnet, dass** es eine sogenannte Triplex-Struktur aufweist.

20. Teil nach Anspruch 18, **dadurch gekennzeichnet, dass** es die Form eines Rohrs oder eines Blechs aufweist, gemeinsam gewalzt, eine erste oder innere Schicht nach einem der Ansprüche 1 bis 14 umfassend sowie eine zweite oder äußere Schicht, angebracht auf der genannten ersten Schicht und aus einem anderen Metall oder einer anderen Legierung als diese erste Schicht.

21. Teil nach Anspruch 20, bei dem die genannte zweite Schicht durch eine Zirkoniumlegierung gebildet wird.

22. Teil nach Anspruch 21, bei dem die die zweite Schicht bildende genannte Zirkoniumlegierung die gleiche Zusammensetzung aufweist wie die die erste Schicht bildende Legierung, aber ohne Erbium und eventuell mit einem anderen Sauerstoffgehalt.

23. Teil nach einem der Ansprüche 21 und 22, bei dem die die zweite Schicht bildende genannte Legierung optimale Eigenschaften hinsichtlich der Außenkorrosion des Rohrs oder des Blechs aufweist.

24. Teil nach Anspruch 19 und einem der Ansprüche 20 bis 23, das außerdem eine unter der genannten ersten Schicht befindliche dritte Schicht umfasst, wobei diese dritte Schicht aus einem anderen Metall ist oder einer anderen Legierung als der Legierung, welche die erste Schicht bildet.

25. Teil nach Anspruch 24, bei dem das Metall oder die Legierung der dritten Schicht genau dem Metall oder der Legierung der zweiten Schicht entspricht.

26. Verfahren zur Herstellung und eventuell Umwandlung der Legierung nach einem der Ansprüche 1 bis 14, das Verschmelzen der wie in einem der Ansprüche 1 bis 6 beschriebenen Legierungselemente umfassend; und eventuell umfassend:
- eine Folge von thermischen Behandlungsschritten und Warm- und/oder Kaltverformungsschritten;
- eine thermische Endbehandlung.

27. Verfahren nach Anspruch 26, bei dem die genannte thermische Endbehandlung bei einer Temperatur unter oder gleich 600°C während einer Dauer durchgeführt wird, die länger ist als eine Minute oder mehrere Minuten.

28. Verfahren zur Herstellung und eventuell Umwandlung der Legierung nach einem der Ansprüche 1 bis 14, das Verschmelzen der wie in einem der Ansprüche 1 bis 6 beschriebenen Legierungselemente umfassend; und eventuell die folgenden Schritte umfassend:
- Thermische Homogenisierungsbehandlung;
- Warmverformung bzw. -knetung;
- Thermische Rekristallisationsbehandlung;
- Kaltwalzen;
- Thermische Rekristallisationsbehandlung;
- Kaltwalzen.

29. Verfahren nach Anspruch 28, bei dem die thermischen Rekristallisationsbehandlungen bei einer Temperatur unter oder gleich 600°C während einer Dauer durchgeführt wird, die vorzugsweise länger ist als eine Minute oder mehrere Minuten.

30. Verfahren nach Anspruch 26 oder Anspruch 28, bei dem die genannte Verschmelzung erfolgt, indem man eine Zirkonium-Ausgangslösung zum Schmelzen bringt, die alle die Legierung bildenden Elemente mit Ausnahme von Erbium umfasst, und der erhaltenen flüssigen Phase die erforderliche Menge Erbiums zugibt, so dass das Erbium sich in der genannten Ausgangslegierung auflöst.

31. Verfahren nach Anspruch 30, bei dem die erforderliche Erbiummenge in Form von Metall zugegeben wird.

32. Verfahren nach Anspruch 30, bei dem die erforderliche Erbiummenge in Form von Legierung zugegeben wird.

33. Verfahren nach Anspruch 32, bei dem die erforderliche Erbiummenge in Form von Oxiden des Typs Er₂O₃ zugegeben wird.

## Claims

1. Zirconium alloy that includes erbium as a consumable neutron poison, **characterized in that** it comprises by weight :
- more than 0.6% of niobium ;
- from 0.1 to 3.0% of erbium ;
- from 0.05 to 0.5% of oxygen ;
- from 50 ppm to 0.6% of iron ;
- up to 3.5% of tin ;
- manufacturing impurities ;
and the remainder zirconium.

2. Alloy according to Claim 1, **characterized in that** it comprises 0.7 to 3% by weight of niobium.

3. Alloy according to Claim 2, **characterized in that** it comprises 0.80 to 1.20% by weight of niobium.

4. Zirconium alloy according to any one of Claims 1 and 3 **characterized in that** it comprises from 0.5 o 2.0% by weight of erbium.

5. Zirconium alloy according to any one of Claims 1 to 4 **characterized in that** the erbium is chosen from among natural erbium, erbium isotopically enriched with ¹⁶⁷Er and their mixtures.

6. Zirconium alloy according to any one of Claims 1 to 5 **characterized in that** said manufacturing impurities comprise :
- from 10 to 120 ppm of silicon
- from 0 to 20 ppm of chlorine
- from 10 to 100 ppm of sulfur
- from 2 to 10 ppm of phosphorus
- from 0.1 to 10 ppm of boron
- from 0.1 to 10 ppm of calcium
- less than 0.1 ppm for each of the following elements : lithium, fluorine, heavy metals.

7. Zirconium alloy according to any one of Claims 1 to 6 **characterized in that** the erbium is distributed in a homogeneous manner in the alloy and **in that** there is no segregation of the erbium in the form of precipitates.

8. Zirconium alloy according to any one of Claims 1 to 6 in which all or part of the erbium is found in the alloy in the form of complex oxide precipitates mainly containing erbium.

9. Alloy according to Claim 8, in which the mean size of said precipitates is less than or equal to one micrometer.

10. Alloy according to any one of Claims 8 and 9, in which said precipitates are distributed in a uniform homogeneous manner in the alloy.

11. Zirconium alloy according to any one of Claims 1 to 10 **characterized in that** said alloy has a microstructure in which the principal phase is constituted by a matrix of zirconium-α and the secondary phase is mainly constituted by individual precipitated micro-crystalline particles of niobium-β.

12. Zirconium alloy according to Claim 7, **characterized in that** said particles of niobium-β of the secondary phase are distributed in a homogeneous uniform manner in the zirconium-α matrix of the alloy.

13. Alloy according to Claim 12, in which said particles of niobium-β of the secondary phase have a mean size of from 10 to 100 nm.

14. Zirconium alloy according to Claim 13, **characterized in that** said particles of niobium-β of the secondary phase have a mean size of 50 nm.

15. Component comprising the zirconium alloy according to any one of Claims 1 to 14.

16. Component according to Claim 15, **characterized in that** it is constituted by cladding and/or a structural element of a fuel assembly for a nuclear reactor.

17. Component according to Claim 15, **characterized in that** it has a so-called multiplex structure comprising the alloy according to any one of Claims 1 to 14 and at least one other material.

18. Component according to Claim 17, **characterized in that** it has a so-called duplex structure.

19. Component according to Claim 17, **characterized in that** it has a so-called triplex structure.

20. Component according to Claim 18, **characterized in that** it is in the form of a tube or a co-laminated sheet comprising a first layer or internal layer constituted by the alloy according to any one of Claims 1 to 14 and a second layer or external layer placed on said first layer and constituted by another metal or alloy different from the alloy constituting said first layer.

21. Component according to Claim 20, in which said second layer is constituted by a zirconium alloy.

22. Component according to Claim 21 in which said zirconium alloy constituting the second layer has the same composition as the alloy constituting the first layer but with no erbium and with an oxygen content that is possibly different.

23. Component according to any one of Claims 21 and 22, in which said alloy constituting the second alloy has optimum properties with respect to the external corrosion of the tube or of the sheet.

24. Component according to Claim 19 and any one of Claims 20 to 23, additionally comprising a third layer placed under said first layer, said third layer being constituted by another metal or alloy different from the alloy constituting the first layer.

25. Component according to Claim 24, in which said metal or alloy constituting the third layer is identical to the metal or alloy constituting the second layer.

26. Method for the preparation and possibly the conversion of the alloy according to any one of Claims 1 to 14, comprising the melting of the elements of the alloy as described in any one of Claims 1 to 6 ; and possibly :
- a succession of heat treatment steps and hot and/or cold forming steps ;
- a final heat treatment.

27. Method according to Claim 26, in which said final heat treatment is carried out at a temperature less than or equal to 600°C and for a duration greater than 1 or several minutes.

28. Method for the preparation and possibly the conversion of the alloy according to any one of Claims 1 to 14, comprising the melting of the elements of the alloy as described in any one of Claims 1 to 6 ; and possibly the following succession of steps :
- a homogenization heat treatment ;
- hot trimming
- a recrystallization heat treatment
- cold rolling
- a recrystallization heat treatment
- cold rolling.

29. Method according to Claim 28 in which the recrystallization heat treatments are carried out at a temperature less than or equal to 600°C and for a duration preferably greater than 1 or several minutes.

30. Method according to Claim 26 or Claim 28 in which said melting is carried out by melting a starting zirconium alloy, comprising all the constituent elements of the alloy except for the erbium and then adding the required quantity of erbium to the liquid phase obtained, meaning that the erbium dissolves in said starting alloy.

31. Method according to Claim 30 in which the required quantity of erbium is added in metallic form.

32. Method according to Claim 30 in which the required quantity of erbium is added in alloyed form.

33. Method according to Claim 32 in which the required quantity of erbium is added in the form of oxides of the Er₂O₃ type.
